# EUROPEAN PATENT APPLICATION

(11) **EP 1 406 167 A1**
(43) Date of publication of application: **07.04.2004**
(21) Application number: 02022222.0
(22) Date of filing: 01.10.2002
(51) Int. Cl.: G06F 9/44

(54) **Content server synchronization**

(71) Applicant: SUN MICROSYSTEMS, INC., Palo Alto, California 94303 (US)
(72) Inventor: Jahnke, Jörg, 22453 Hamburg (DE)
(74) Representative: HOFFMANN - EITLE

(57) **Abstract**

The content stored at a plurality of content servers is synchronized with the content stored at a central location as a result of employment of a version control system. The content may be generated by developers and transmitted to the central location by the version control system. Updates to the content stored at the content servers may be achieved with or without requests from the content servers. Furthermore, updates may be achieved at predetermined intervals or when predetermined events occur.

## Description

### FIELD OF THE INVENTION

This invention relates to methods and systems for synchronization of the content of a plurality of content servers.

### BACKGROUND OF THE INVENTION

Computing devices are increasingly employed in offices and homes to provide a wide range of services including for example text processing applications, spread sheet applications, applications for financial transactions, entertainment applications, and applications for viewing, retrieving and manipulating content, content being any information that is available for retrieval from a computing device, e.g. by a user at a client.

Generally, content is maintained at a content server for access by a user. As an example, content available at a content server may be accessed from a client being controlled by a user through input of appropriate commands to select, retrieve, etc., desired content at the content server. The commands may, e.g. be input through use of keyboard and mouse in cooperation with a graphical user interface (GUI), web-browser or similar. The input commands are then transmitted to the content server through a computer network such as a wide area network, e.g. the Internet, or a local area network such as a company wide network and the server processes the commands to return appropriate information to the client for viewing purposes, printing, manipulation operations and similar.

While the client may be located in an office or home for convenient access by a user, the content server may be located at virtually any location. Thus, a network connection between the client and the content server may potentially cover a long distance and with the increasingly widespread use of computer networks for distributing and accessing information, capacity and bandwidth is becoming more and more an issue to be observed.

To avoid delays in accessing information from a client on a content server, information available on one content server may be replicated on at least one further content server, e.g. to increase data providing capabilities and to enable access from the client to a server which is located closer to the client.

Such a group of content servers cam be called a cluster of content servers. When a system includes a cluster of content servers, that is a plurality of content servers, which are all required to offer the same information or content, it is necessary to synchronize the content on the content servers, i.e. to make sure that all servers of the cluster hold the same content version. The synchronization can be done manually by copying new or modified content elements such as pages to all content servers, e.g. to slave content servers from a master content server. For small numbers of content servers this may be at least not an impractical task.

However, if a large number of pages needs to be synchronized, the synchronization operations become time consuming and a problem arises.

### SUMMARY OF THE INVENTION

It is therefore desirable to provide for an efficient and convenient solution for synchronizing large volumes of content.

According to an exemplary embodiment a computer system comprises a central server upon which content can be stored; at least one content server upon which content can be stored; and a version control system for synchronizing the content stored on the central server with the content stored on the at least one content server. Thus, the version control system may be advantageously employed for synchronization purposes.

According to another embodiment, the computer system further comprises at least one developer device for generating content, and the version control system is arranged to transmit the generated content from the at least one developer device to the central server for storage thereat. Thus, the version control system may be employed for both submission of content to the central server and synchronization purposes.

According to another embodiment, the version control system includes means to transmit an initial version of the content stored on the central server to the at least one content server upon a request therefrom for an initial synchronization and the version control system may also include means to perform a subsequent synchronization with later versions of the content stored on the central server without requests from the at least one content server.

According to another embodiment, the version control system includes means to perform a subsequent synchronization with later versions of the content stored on the central server upon requests from the at least one content server.

According to another embodiment, the version control system includes means to maintain a log record of timings of synchronizations of content between the central server and the at least one content server; and means to identify a timing of a previous synchronization upon a subsequent synchronization; means to identify content which was modified or added after the identified timing; and means to use the identified content in the subsequent synchronization.

According to another embodiment, the version control system includes a version control system server program and a version control system client program; each said developer device comprises a memory for storing the version control system client program; the central server comprises a memory for storing the version control system server program; each said content server comprises a memory for storing said version control system client program; and the generated content being stored in the central server memory and the content server content being stored in the respective content server memories.

According to another embodiment, the version control system is a concurrent version system (CVS). Further, the central server may comprise a master content server and a CVS server, and the at least one content server may comprise a slave content server. According to another embodiment, a cluster of content servers is provided. The central server may be a CVS server.

According to another embodiment, the developer device is one of - a personal computer-; - a desktop computer; and - a laptop computer and, according to another embodiment, the central server and the at least one content server may be constituted by webservers.

According to another embodiment, the version control system includes means to perform said subsequent synchronization at predetermined intervals. According to still another embodiment, the version control system includes means to detect a change of the content stored at the central server and to perform said subsequent synchronization when a change of the content is detected and, according to another embodiment, the version control system includes means to monitor at least one of adding elements and modifying elements of the content and to perform said subsequent synchronization when a predetermined number of elements has been added or modified.

According to another exemplary embodiment a central server includes means to communicate with at least one content server storing a version control system server program, comprises a central server memory for storing a version control system server program and a content store; and a central server processor for running the version control system server program and causing updates to the content store to be transmitted to the content servers in use thereof.

According to another exemplary embodiment a content server includes means to communicate with a central server with a version control system, comprises: a content server memory for storing a version control system client program, a content store and update requesting code for requesting updates to the content store from the central server; and a content server processor for running the version control system client program and executing the update requesting code.

According to another exemplary embodiment a method of synchronizing content stored on a central server and content stored on at least one content server, includes the steps of: storing the content on the central server in accordance with a version control system; and employing the version control system for transmitting content updates from the central server to the at least one content server.

According to another exemplary embodiment a program has instructions adapted to carry out any of the above operations. And, a computer readable medium may be provided, in which a program is embodied, wherein the program is to make a computer system, including a central server and at least one content server, execute any of the above operations. A computer program product may comprise the computer readable medium.

Further features of the invention are disclosed in further claims.

This summary is not intended to limit the scope of the invention, which is defined solely by the claims attached hereto.

### BRIEF DESCRIPTION OF THE DRAWINGS

Embodiments of the invention will now be described with reference to the accompanying drawings, in which:
- Figs. 1A and 1B: schematically illustrates an embodiment of a system for content server content synchronization according to the present invention;
- Figs. 2A, 2B, 2C, 2D and 2E: illustrate in flow charts the operations of basic methods of content server content synchronization according to embodiments of the present invention;
- Figs. 3A, 3B and 3C: illustrate in flow charts the operations of a particular method of content server content synchronization according to the present invention, and Fig. 3D illustrates an alternative to Fig. 3C;
- Figs. 4A, 4B and 4C: illustrate the operations of Figs. 2A, 2B and 2C in an alternative manner, and Fig. 4D illustrates an alternative to Fig. 4C;
- Fig. 5: illustrates an alternative system for content server content synchronization;
- Fig. 6: illustrates a basic system employing CVS in greater detail than in Fig. 1 together with a user of the system; and
- Figs. 7, 8, 9 and 10,: respectively, show a web developer client, a CVS server, a content server client and a user in greater detail.

Whilst specific embodiments are described and illustrated herein, these embodiments are not intended to limit the scope of the invention, which is susceptible to various modifications and alternative forms.

### DETAILED DESCRIPTION OF THE PREFERRED EMBODIMENTS

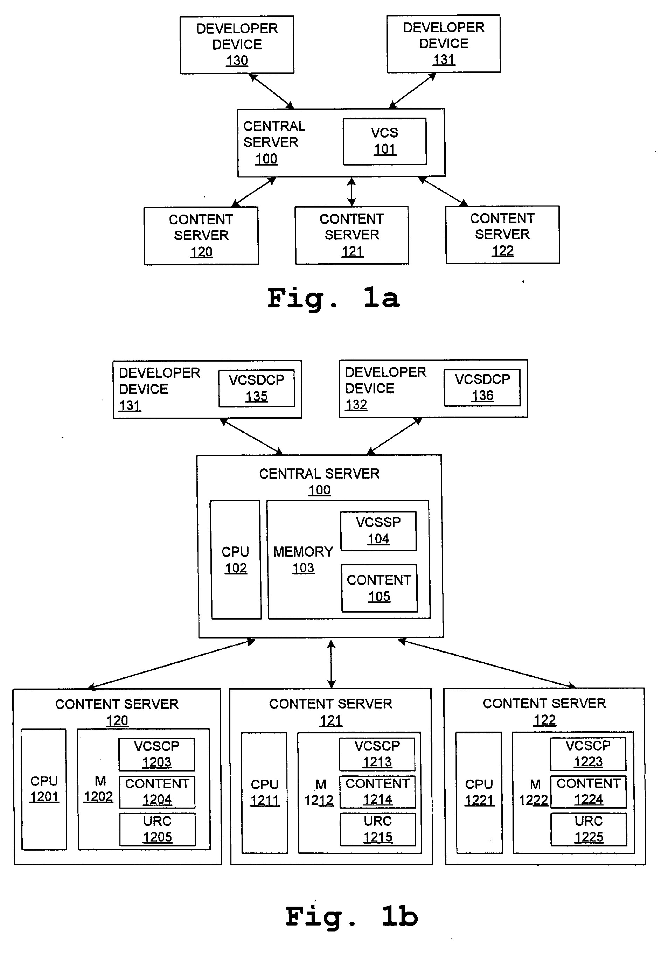

In the following, a first embodiment of the invention will be described with regard to Fig. 1A.

Fig. 1A illustrates elements of a system for content server content synchronization including a central server 100 embodying a version control system 101 and three content servers 120, 121 and 122. Further, Fig. 1A shows two developer devices 130 and 131, e.g. operated by content developers.

While as an example three content servers and two developer devices are shown, it is noted that an arbitrary number of tent servers and developer devices can be employed.

On the central server 100 and the three content servers 120, 121 and 122 content can be stored. Further, the version control system is provided for synchronizing the content stored on the central server with the content stored on the content servers.

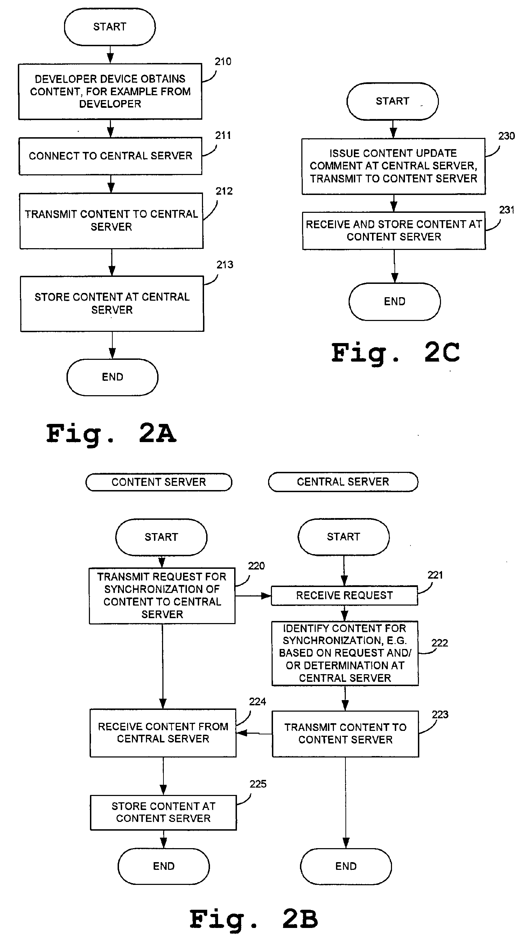

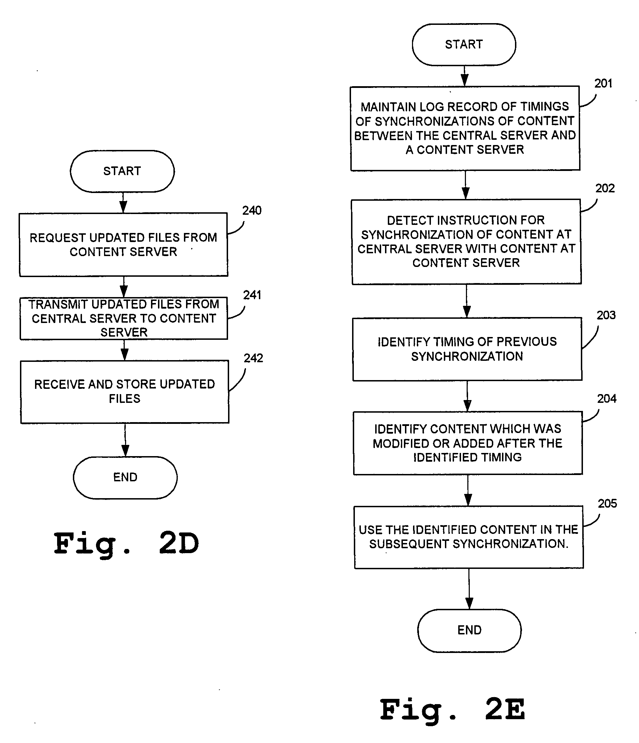

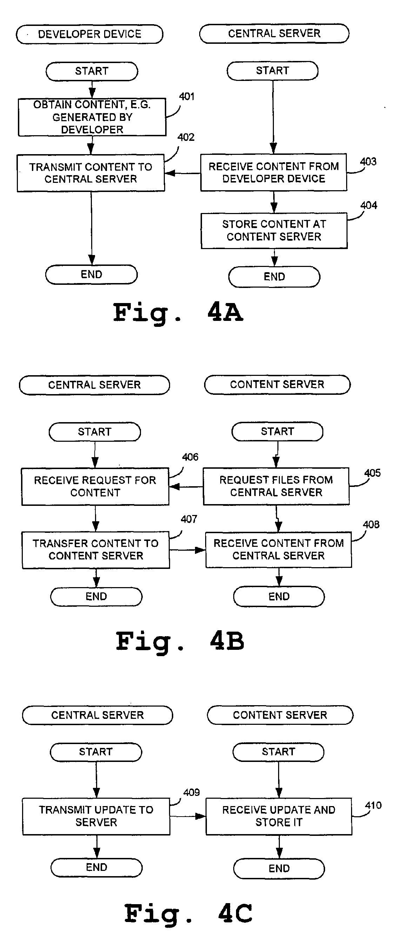

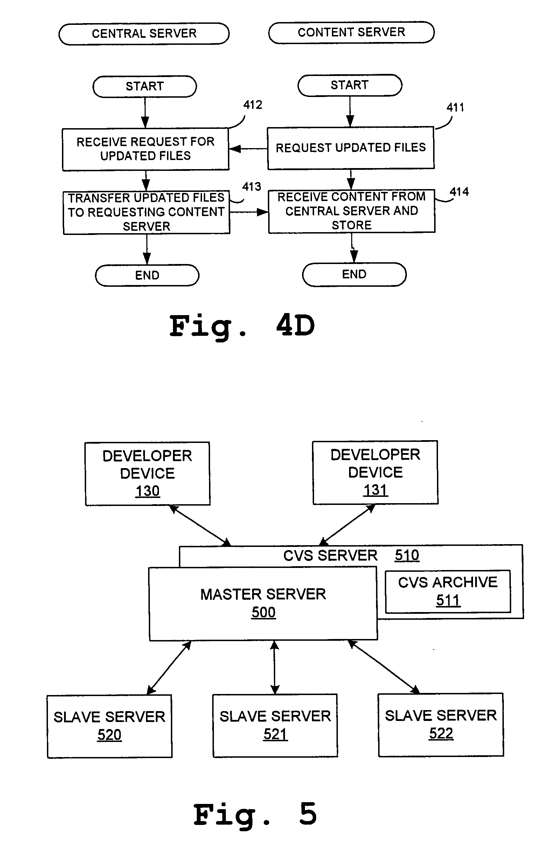

In an example, content developers working with the developer devices 130 and 131 generate content such as web page content and then store their respective content on the central server 100 which employs the version control system 101. The central server 100 then synchronizes its content with the content on the cluster of content servers 120, 121 and 122 in the manner described hereinafter with respect to Figs. 2A, 2B and 2C, or 2D, or Figs. 4A, 4B and 4C, or 4D. When the version control system 101 is CVS, the web page content is stored in one or more CVS archives.

In operation, for synchronizing content stored on the central server 100 and content stored on the plurality of content servers 120, 121 and 122, the content is stored on the central server 2 in accordance with the version control system, and the version control system is employed for transmitting content updates from the central server 100 to content servers, in the present embodiment the plurality of content servers 120, 121 and 122.

The embodiment advantageously allows to use a version control system for synchronization purposes and further enables an efficient synchronization and allows to conveniently maintain e.g., a history of content facilitating access to previous versions of the content or viewing a change history of the content.

In the following examples of the elements of the system shown in Fig. 1a are outlined in further detail.

The content servers 120, 121 and 122 and/or the central server 100 may be constituted by any server device or group of server devices providing any kind of content to a client upon a request. They may generally be constituted by any kind of computing device, preferably, however, by computing devices having large storage, processing and communication capacity.

The developer devices 130 and 131 may be constituted by general purpose computing devices such as a workstation, a personal computer, a laptop, palmtop computer and similar and may offer facilities to e.g. generate or modify content available on the central server and/or content servers.

The content servers, the central server and the developer devices may be connected over any kind of communication link, including computer networks, such as local or wide area networks, including the Internet, including dedicated communication links. Thus, the content server and/or the central server may be arranged at a remote location and connected to the developer devices over the computer network or dedicated communications link.

The term 'content' is used here to describe any information that is available for retrieval from a data processing device, e.g. by a user at a client. Content may include information and data constituted by Web pages, images, music, audio, white papers, driver and software downloads as well as training, educational and reference materials and similar.

Further, in an example, a content server and/or the central server may be constituted by a webserver to'provide content for users of the World Wide Web. The World Wide Web or simply Web is an Internet service that links documents locally and remotely. Documents are on the Internet in "Webservers" that store and disseminate "Web pages." The Web pages are accessed by the user with software called a "Web browser" through the Internet. The Internet is constituted by a large number of computers virtually everywhere in the world covering commercial, academic and government endeavors. The Web page, or Web document, may contain text, graphics, animations and videos as well as hypertext links. The links in the page let users jump from page to page (hypertext) whether the pages are stored on the same server or on servers around the world. Web browsers provide a point and click interface to online information provided on a large number of webservers in the world. The Web is also used for online shopping as almost every organization has added electronic commerce (e-commerce) capabilities. In addition, the Web allows to deliver software, such as new browser features and plug-in extensions allow for audio, video, telephony, 3-D animations and videoconferencing. Most browsers also support the Java language, which allows applications to be downloaded from the Net and run locally.

The fundamental Web format is a text document embedded with HTML tags that provide the formatting of the page as well as the hypertext links (URLs) to other pages. HTML codes are common alphanumeric characters that can be typed with any text editor or word processor. Numerous Web publishing programs provide a graphical interface for Web page creation and automatically generate the HTML codes. Many word processors and publishing programs also export their documents to HTML, thus basic Web pages can be created by users without learning any coding system.

Still further, web pages are maintained at Web sites, e.g. webservers, which are computers that support the Web's HTTP protocol. To access a Web site one usually first links to its home page, which is an HTML document that serves as an index, or springboard, to the site's contents. In many cases, the default home page for most Web sites is named INDEX.HTML. Large organizations create their own Web sites, but the actual webservers (computer systems) that store the Web pages are often housed (co-located) at third-party facilities that provide space, power and access to the Internet. Smaller Web sites are generally hosted on servers run by their Internet service providers (ISPs). Further, individuals have developed personal Web pages as many ISPs include this service with their monthly access charge.

Traditionally developers store information, i.e. content, they have developed on a master content server, and the relevant content of the master content server is copied at regular intervals to slave content servers. Thus, the slave content servers may be considered to "mirror" the content stored at the central server. This method is, however, unable to take into account older versions of pages being searched for, or if a searcher is interested in the changes history of a page.

Therefore, to facilitate the synchronization process and to allow, e.g. convenient access to a history function, the central server includes a version control system, such as CVS, to be described below, or any other version control system. The version control system may be constituted by a program executed by the central server or at a remote location. Further, the version control system may include program portions at the content server and/or the developer devices.

In the following, a further embodiment of the invention will be described with respect to Fig. 1B.

Fig. 1B schematically illustrates an embodiment of a system for content server content synchronization according to the present invention.

Fig. 1B again illustrates the central server 100 and the three content servers 120, 121 and 122. Further, Fig. 1B shows the two developer devices 130 and 131, e.g. as operated by content developers.

Further to Fig. 1A, Fig. 1b illustrates elements of a version control system, such as the version control system 101 of Fig. 1a. In Fig. 1B, the central server 100 includes a central server memory 103 for storing a version control system server program 104 and a content store 105. Further, the central server 100 includes a central server processor 102 for running the version control system server program and causing updates to the content store to be transmitted to the content servers in use thereof.

Moreover, the each of the content servers include content server memories for storing version control system client programs and a content store and update requesting code for requesting updates to the content store from the central server and a content server processor for running the version control system client program and executing the update requesting code.

More precisely, the content server 120 includes a content server memory 1202 for storing a version control system client program 1203 1213 1223, a content store 1204 and update requesting code 1205 for requesting updates to the content store from the central server, and a processor 1201 for running the version control system client program and executing the update requesting code, the content server 121 includes a content server memory 1212 for storing a version control system client program 1213, a content store 1214 and update requesting code 1215 for requesting updates to the content store from the central server, and a processor 1211 for running the version control system client program and executing the update requesting code and the content server 122 includes a content server memory 1222 for storing a version control system client program 1223, a content store 1224 and update requesting code 1225 for requesting updates to the content store from the central server, and a processor 1221 for running the version control system client program and executing the update requesting code.

Further, the developer device 131 includes version control system developer client program 135 and the developer device 132 includes version control system developer client program 136.

The version control system server program of the central server and the version control system client program of the content servers constitute the version control system. Further, the version control system can include the version control system developer client programs of the developer devices.

In operation the server and client programs exchange messages to effect a synchronization of the content stored on the central server and the content servers. The version control system server program and the version control system client program cooperate to effect a synchronization of the contents stored on the central server and the content servers. For example, the version control system client programs at the content servers could be arranged to transmit a request for an initial version synchronization of the contents stored on the central server and the content servers to the central server. Upon receiving the request the version control system server program transfers content from the central server to the requesting content server to effect a synchronization. The received content is handled by the version control system client program and stored at the content server.

According to an alternative, the central server, upon receiving the request for synchronization from a content server, determines the content elements which were added or modified since a previous synchronization with the requesting content server. The identified elements of the content are then transmitted to the content server, thus advantageously reducing the amount of data to be transferred from the central server to the content server. To facilitate identification of the elements of the content which were added or modified since a last synchronization, the content server may maintain a log file identifying a point in time of each synchronization. Then, upon receiving a synchronization request, the version control system server program could visit the log and retrieve the time stamp of the last synchronization. Based on this time stamp the version control system server program then identifies all elements of the content which were added or modified after the obtained time stamp. The thus identified content elements are then transferred to the requesting content server for synchronization.

According to another embodiment the version control system server program is arranged to perform a synchronization without request from a content server, e.g. on the basis of regular time intervals, or, if a predetermined number of content elements or files was added or modified. In this case, the version control system server program, similarly to the above example, identifies all content elements which were added or modified since a last synchronization operation and transmits same to the content server or synchronization.

In the following operations of methods of content server content synchronization according to the present invention will be described with respect to Figs 2A, 2B, 2C, 2D, 2E and 2F.

The operations outlined in Fig. 2A outline operations to transfer and maintain content at a central server, e.g. from at least one developer device.

The basic process illustrated in Fig. 2A comprises an operation 210 in which a developer device obtains content. The content may, for example, be generated by a developer generating web page content on a respective developer device. The operation of obtaining content can be performed offline and at a location remote from the central server and the generated web page content may include any kind of information such as web pages, program code source files, office documents, JPEG images, XML files and GIF images and similar.

To submit the generated content, in an operation 211, the developer device goes online, i.e. connects to the server. For example, one or both of the developer device 130 or 131 connect to a central server, such as the central server 100 of Figs. 1A and 1B. The connection may be established using a computer network, such as a wide area network, a local area network or may involve dedicated communication links, as known in the art.

Alternatively the developer device may be permanently connected with the central server.

Then, in a operation 212, the developer device transmits the respective files containing the generated web page content to the central server, where they are stored in an operation 213.

In an example, the developer device includes a client portion of a version control system, such as the version control system developer client program 135 or 136 as shown in Fig. 1B. After the connection between the developer device and the central server is established, the version control system developer client program is instructed to submit the content from the developer device to the central server. The received content is then handled at the central server by a version control system server portion, such as version control system server portion 104 of Fig. 1B and stored in a content store at the central server, such as content store 105 shown in Fig. 1B.

Alternatively or further thereto, the developer devices can be used to maintain the content at the central server up to date, i.e. content elements at the central server may be added or modified as necessary.

In the following operations of another embodiment of the invention will be outlined with regard to Fig. 2B.

In the process illustrated in Fig. 2B, the content servers, such as content servers 120, 121 and 122 of Figs. 1A and 1B are prepared with an initial synchronization for subsequent automatic update of their content. In an example, the version control system includes means, such as a program section with coded instructions and/or hardware elements, to transmit an initial version of the content stored on the central server to the at least one content server upon a request therefrom for an initial synchronization.

In an operation 220 each content server cooperating with the central server transmits a request for synchronization of content to the central server, to request content from the central server.

If the content servers are newly connected or for other reasons do not yet hold content maintained at the central server, the entire content at the central server may be requested for transmission to the content servers.

Alternatively, if the content servers already hold content or if the content servers are designated to "mirror" only part of the content at the central server, the relevant content, e.g. web page content files, are requested for transmission.

In an example, each content server includes a client portion of a version control system, such as the version control system client program 1203, 1213 and 1223, respectively, as shown in Fig. 1B. Thus, the version control system client programs may issue the request for content, i.e. synchronization to the version control system server program.

In operation 221 the central server receives the request from content server and in an operation 222 the central server identifies content for synchronization. The content may be identified based on the request, i.e. based on an indication which part of the server content is to be synchronized with the requesting content server and/or may be based on a determination at the content server which content elements were added or modified since a last synchronization with the subject content server.

In an operation 223 the central server transmits the content for synchronization to the requesting content server and in an operation 224 the content server receives the requested content, e.g. files, pages, images, and stores them in an appropriate manner, e.g. at the content server memory 1201, 1211 and 1222, respectively, of Fig. 1B.

In an example the above operations are carried out for each content server of a cluster of content servers, such as the content servers 120, 121 and 122 of Fig. 1A and Fig. 1B.

In an example, in the above operations, the version control system client program is responsible for transmitting the request for synchronization to the central server and for receiving and storing the content for synchronization from the central server, and the version control system server program is responsible for receiving the request for synchronization from the content servers, for identifying the content for synchronization and for transferring the content for synchronization to the content servers.

The above operations particularly relate to an initial synchronization of the central server with one or a plurality of content servers.

In the following operations of an embodiment of the invention will be outlined with respect to Fig. 2C.

The process illustrated in Fig. 2C is one that can particularly be employed for the subsequent automatic update of the files stored at the content servers.

In operation 230 the central server issues a content update comment, the execution of which serves to update-the content on each content server appropriately. The update comment may apply to each of a plurality of content servers, e.g. if the content server are all holding the same content and are synchronized at the same point in time. Alternatively, an update comment may be issued individually for each content server, e.g. if the content servers hold different portions of the content at the central server or are updated at different points in time.

The update comment may be issued by a version control system server program at the central server and the content update comment preferably includes an address of the subject content server and the content or content elements for the synchronization operation. The content for synchronization may be determined, as outlined above, based on a determination at the central server of content elements which were added or modified since a previous synchronization with the requesting content server. Only the identified elements of the content may then be transmitted to the content server, thus advantageously reducing the amount of data to be transferred from the central server to the content server. To facilitate identification of the elements of the content which were added or modified since a last synchronization, the content server may interrogate a log file identifying a point in time of each synchronization operation with a particular content server. Then, upon receiving a further synchronization request, the version control system server program visits the log and retrieves the time stamp of the last synchronization. Based on this time stamp the version control system server program then identifies all elements of the content which were added or modified after the obtained time stamp. The thus identified content elements are then transferred to the requesting content server for synchronization.

In operation 231 each of the content servers receives and stores the respective content update.

In the following operations of an alternate embodiment of the invention will be outlined with respect to Fig. 2D.

In the alternative process illustrated in Fig. 2D, each content server keeps itself up-to-date by requesting updated files from the central server.

In an operation 240 each content server issues a request for an update to the central server. The request may be issued at regular intervals or upon an instruction received at the content server, such as from a remote operator requesting the content server to perform an update.

The central server then identifies and transfers the updated files to the requesting content server in an operation 241 and the content server concerned receives and stores the updated files in an operation 242. As outlined before, the content may be identified based on the request, i.e. based on an indication which part of the server content is to be synchronized with the requesting content server and/or may be based on a determination at the content server which content elements were added or modified since a last synchronization with the subject content server.

The methods illustrated in Figs. 2A-D may be applied at regular intervals although alternatively it may be applied upon any change in the central server content storage, or when a predetermined number of files have been added or modified.

In the following a further embodiment of the invention will be described with respect to Fig. 2E.

Fig. 2E outlines operations for synchronizing a content at a central server with contents stored at a content server, particularly focussing on reducing an amount of data to be transferred between the central server and the content server. The operations of Fig. 2E may be executed using the system shown in Fig. 1A or Fig. 1B, however, Fig. 2E is not limited thereto.

In a first operation 201 the version control system maintains a log record of timings of synchronizations of content between the central server and a content server. Preferably, the version control system, e.g. the version control system server program at the central server, maintains such a log record for each one of the content servers handled by the central server, e.g. the content servers 120, 121 and 122 of Figs. 1a and 1b.

In an operation 202 an instruction is detected for synchronization of content at the central server with content at a content server. This instruction may stem from a corresponding request from the content server, where may stem from any other source, such as an automatic instruction from the version control system after lapse of the certain time since a last synchronization or if a predetermined number of content elements has been added or modified.

Thereafter, in an operation 203 the version control system, e.g. the version control system server program at the content server, identifies a timing of a previous synchronization carried out with the subject content server. Then, in an operation 204 the version control system identifies content at the central server which was modified or added after the identified timing of the previous synchronization with the subject content server. The content elements may for example be detected based on a time stamp recorded in connection with a particular element of the content, showing a date of creation and/or a date of modification. Alternatively, only content elements created after the identified timing of the last synchronization could be identified or, in another alternative, content elements which were modified after the last synchronization could be identified.

Thereafter, in an operation 205 the identified content is then used in a subsequent synchronization, for example, the identified content is transferred under control of the version control system server program to the content server, where it is received under control of the version system control client program for storage and the content server.

In an example, the version control system includes means, such as a program section with coded instructions and/or hardware elements, to perform a subsequent synchronization with later versions of the content stored on the central server upon requests from the at least one content server. Alternatively the synchronization with later versions of the content stored on the central server may be effected without requests from the at least one content server.

Moreover, in another example, the version control system includes means to maintain a log record of timings of synchronizations of content between the central server and the at least one content server and, upon a subsequent synchronization, means to identify a timing of a previous synchronization, means to identify content which was modified or added after the identified timing and means to use the identified content in the subsequent synchronization.

Still further, in another example, the version control system includes means to perform said subsequent synchronization at predetermined intervals, and/or means to detect a change of the content stored at the central server and to perform said subsequent synchronization when a change of the content is detected, and/or means to monitor at least one of adding elements and modifying elements of the content and to perform said subsequent synchronization when a predetermined number of elements has been added or modified.

The above means may be constituted by program sections with coded instructions, e.g. in the form of a version control system content server and central server program and/or corresponding hardware elements realizing the above functionality.

The embodiment described with regard to Fig. 2E allows to reduce an amount of data to be transferred between the central server and the content servers.

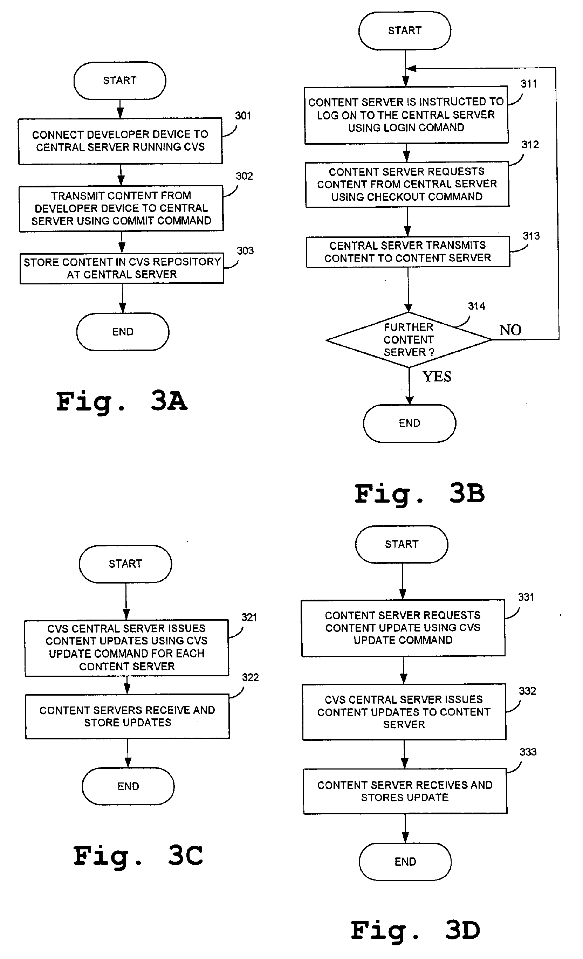

In the following operations of a method of content server content synchronization according to the present invention will be outlined with respect to Figs. 3A, 3B, 3C and Fig. 3D.

Figs. 3A, 3B, 3C and Fig. 3D particularly outline operations for content synchronization using CVS (concurrent version system). It is, however, noted that CVS is an example only and that any version control system may be employed instead.

Version control systems have previously been proposed in order that different versions of files (stored data) can be accessed and information, such as when files were changed, obtained.

A particular version control system is CVS (Concurrent Version System) which offers storage of older version of files as well as changes. CVS is a version control system to record a history of source files. CVS effectively stores all versions of a file in a single file, but instead of storing each version in its entirety, it stores the differences between versions.

CVS maintains a central repository which stores files (often source code) including past versions, information about who modified them and when, and so on. People who wish to look at or modify these files, known as developers, use CVS to "check out" a "working directory" from the repository, to "check in" new versions of files to the repository, and other operations such as viewing the modification history of a file. If developers are connected to the repository by a network, the most efficient way to use the network is with a CVS- specific protocol. The CVS "client" program is executed on a developer device, e.g. operated by a developer, i.e. on the machine/device on which developers store their working directory. To perform operations which cannot be done locally it is necessary to connect to the CVS "server" program which maintains the repository on a central server (CVS server).

As a brief overview, CVS provides the following functionality:
- Each developer uses CVS CHECKOUT to create his own copy of the source tree from the CVS repository. The command can operate on a directory tree, a single file or a module; a module groups several files or directories into one entity which can be operated on as a unit. One defines modules by editing the 'modules' file.
- The developer modifies, compiles and tests the code in her copy of the source tree (called a working directory) with whatever editors and tools she chooses -- Emacs, make, etags, etc. She uses CVS ADD and CVS REMOVE to add and remove files.
- When the changes are complete, the developer uses CVS COMMIT to merge her changes back into the repository. This makes her changes available to other developers.
- At any point, the developer may use CVS UPDATE to merge changes committed by others into her working directory. If there are uncommitted changes to files in her working directory, CVS prints a message and attempts to merge the changes from the repository with her changes in the working directory. If the merge fails, CVS indicates a conflict which she resolves manually with a text editor.
- The developer can show the differences between two revisions with CVS DIFF; show the log of changes to a particular file with DVS LOG; show the history of each line of a file with CVS ANNOTATE; and show who has used CVS CHECKOUT, CVS TAG, and several other CVS commands, using CVS HISTORY.
- CVS supports watches, allowing developers to request notification when someone begins editing a file or obtain a list of developers currently working on a file.
- The user can record the state of the repository at a particular point with the CVS TAG command and use that tag as an argument to most CVS commands, for example to retrieve the files as of the tagged point.
- The developer can create a new development branch with CVS TAG -b, and manipulate branches with CVS UPDATE -r and CVS CHECKOUT -r. Subsequent operations in that working directory apply to that branch. To return to the main branch, the developer can use CVS UPDATE -A. The CVS UPDATE -j command merges changes made on another branch into the working directory.
- The existence or nonexistence of a file is itself version controlled so that files can exist on some but not all branches and users can reproduce the state of the files at any given point in time.

Further information on CVS may be obtained from "CVS Pocket Reference", Gregor N. Purdy, August 2000, 0-596-00003-0, O'Reilly, Order Number: 0030.

In the following operations of content synchronization according to the present invention will be outlined with respect to Fig. 3A. Fig. 3A particularly outlines operations for transferring content from a developer device to a central server.

In the embodiment of Fig. 3A, for example a web developer, generates content on a developer device, for example web page content, as outlined before. The developer device includes the CVS client program. This may include any kind of content for presentation to any kind of users or user groups.

In an operation 301, a developer device, such as the developer device 130 or 131 connects to a central server, such as the central server 100 of Figs. 1A and 1B. In a practical example, the web developer may go online by connecting to the central server over a computer network or any dedicated communication link.

In the present example the developer device includes a CVS client program, which is responsible for connecting to the central server, which in the present example is a CVS server. The CVS client program has functionality to "check in" files at the central server. The files in the present example are constituted by content, as outlined above.

In an operation 302 the developer device transmits the content to the central server, assisted by the CVS client program and the CVS server program at the central server using a CVS "commit" command.

In an operation 302 the central server stores the files containing the generated content in a central server memory. The central server is a CVS server running the CVS server program and the files are thus stored in a repository of the CVS server.

With the above operations one or a plurality of developer devices can be employed to provide and maintain a "master copy" of content at the central server. By using CVS the content at the central server will always be consistent and further, a history of changes can be maintained.

In the following operations for initially synchronizing content on a plurality of content servers with the central server will be described with respect to Fig. 3B.

These operations prepare the content servers, such as the content server 120, 121 and 122 of Figs. 1A and 1B, for subsequent automatic update operations.

In the following a further embodiment of the invention will be described with respect to Fig. 3B.

In the process illustrated in Fig. 3B , in an operation 311 a first content server is instructed to log on to the central server using the CVS "login" command.

In an operation 312, the content server uses a CVS "checkout" command to request the relevant content, e.g. web page content files.

The CVS server supplies the content to the requesting content server in an operation 313.

In order to ensure that all content servers of a cluster of content servers are so prepared, operations 311, 312 and 313 are followed by a decision operation 314, which determines whether or not all content servers of a cluster have the current files, and repeats the process steps 311, 312 and 313 for each content server in turn as necessary until all are prepared.

In the following a further embodiment of the invention will be described with respect to Fig. 3C.

For subsequent automatic updates the CVS central server issues an "CVS update" command in an operation 321 of Fig. 3C for updating the content of each content server. Such an update may be performed at predetermined, regular intervals.

The respective content servers receive the update in operation 322 and store the content update appropriately. In order to ensure update of all content servers, a decision operation process similar to operation 314 of Fig. 3B may be employed.

Alternatively, the update may be initiated from each content server, for example on a regular basis, and as indicated in Fig. 3D, with each content server requesting a content update using a CVS update command in an operation 331.

The CVS central server then transfers the content update requested by the content server in an operation 332 and these are received by and stored at the content server in an operation 333.

In the following operations of a method of content server content synchronization according to the present invention will be outlined with respect to Figs. 4A, 4B and 4C illustrating the operations of Figs. 2A, 2B and 2C in an alternative manner, and Fig. 4D illustrating an alternative to Fig. 4C;

The process operation of Figs. 2A, 2B and 2C, and Figs. 3A, 3B and 3C, are illustrated in Figs. 4A, 4B, 4C as operations performed by the developer devices, the central server and the content server. The corresponding alternative processes being as illustrated in Fig. 4D.

In Fig. 4A, a developer device provides content in operation 401. For example, a developer generates web page content on the developer device. Then the files containing this content are transmitted to the central server in an operation 402. If the version control system is CVS, the "CVS commit" command is used. The central server receives the files from the developer device at operation 403 and stores them in its central repository at operation 404. For mutual communication operations the central server and the content server include means to transmit and receive data over a communication link, such as a dedicated communication line or a communication network, such as a local area or wide area network. In an example the content server and central server include the necessary hardware and software to arrange data into a format for transmission, using a communication protocol, and to receive information and to extract transmitted payload data.

For the preparation of the content servers, each content server requests files from the central server at operation 405 of Fig. 4B. If the version control system is CVS, the "CVS login" and the "CVS checkout" command are used. The central server receives the request for files at operation 406 and downloads the requested files to the content server at operation 407. The content server receives the requested files at operation 408 and stores them in an appropriate manner. This process needs to be repeated for each content server of the cluster involved.

Subsequent automatic update of the content of the content servers is carried out as illustrated in Fig. 4C, namely in operation 409 the central server transmits an update to each content server, and in operation 410 a content server receiving such an update stores the update accordingly.

As indicated previously, this process needs to be repeated for each content server of the cluster. Alternatively, the operations of Fig. 4D may be employed for update of the content server content. In this alternative a content server requests updated files at 411. The request issued by the content server may include identification information of the requesting content server, time information regarding a previous update to facilitate identifying the update content and similar. A content server may issue the request in regular time intervals or based on an instruction, e.g. from a user or any other device.

If the version control system is CVS the CVS server issues an "CVS update" command in operation 409, or the content server issues an "CVS update" command in operation 411. The central server receives the request at 412, and transfers the updated files to the requesting content server at 413, and the content server receives and stores the updated files at 414.

In the following a further embodiment employing CVS with a dedicated CVS server is described with regard to Fig. 5. Fig. 5 illustrates elements of an alternative system for content server content synchronization according to the invention.

In this case a configuration similar to the embodiment of Figs 1A and 1B is used. However, instead of a central server and content server in the system of Fig. 5 a master content server 500 and slave content servers 521, 522 and 523 are employed. Further, in the present case the master content server is also connected to or includes a CVS server 510 with the content being stored in a CVS archive 511 at the CVS server 510. Developer devices 130 and 131 are connected to the CVS server 510, to supply and maintain content on the CVS server.

For the synchronization or update operations it is necessary to update the content server content on the master content server and the content on the slave content servers. Generally, the update operations for the content on the master content server and the content on the slave content servers may be the same.

For example, an update operation for the master content server and for the slave content server can be carried out using the "CVS update" command from the archive 511 on CVS server 510.

Alternatively, an update operation for the master content server can be carried out using the "CVS update" command from the archive 511 on CVS server 510 and an update operation for each of the slave content servers can be carried out using the "CVS update" command from the master content server.

As another alternative, the master content server may itself request an update from the CVS server and each of the slave content servers may request an update from the master content server, substantially as outlined with respect to previous embodiments.

It is noted that in further embodiments any other version control system may be used instead of CVS, in which case the CVS server is constituted by a version control server, and the synchronization operations are carried out via requests and instructions based on the version control system employed.

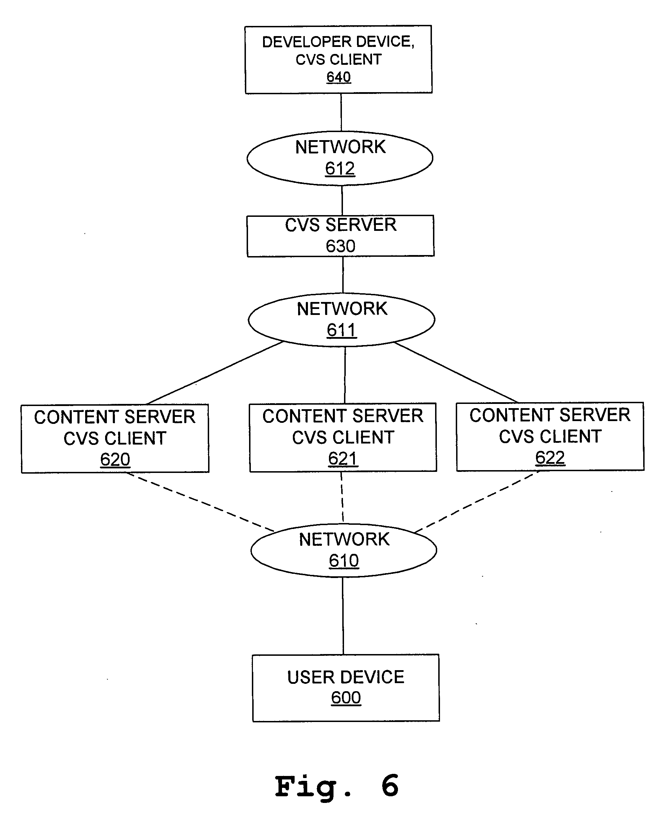

A further embodiment of the invention is mow described with regard to Fig. 6.

The arrangement of Fig. 6 indicates a basic system for synchronizing content similar to the system of Fig. 1A or 1B. The arrangement of Fig. 6 additionally shows a user device 600 in communication with a network 610 connectable to one of three (as illustrated) content servers 620, 621 and 622. The content servers may be like the content server 120, 121 and 122 shown in Figs 1A and 1B. The user device may be any kind of computing device such as a personal computer, a desktop computer or a laptop computer.

The content servers are connected over a network 611 to a CVS server 630, such as the CVS server 100 as described with respect to Figs. 1A and 1B. Moreover, the CVS server 630 is connected to a developer device 640 via a network 612.

The networks 610, 611 and 612 may include any kind of network interconnecting computing devices and may also include dedicated communication links.

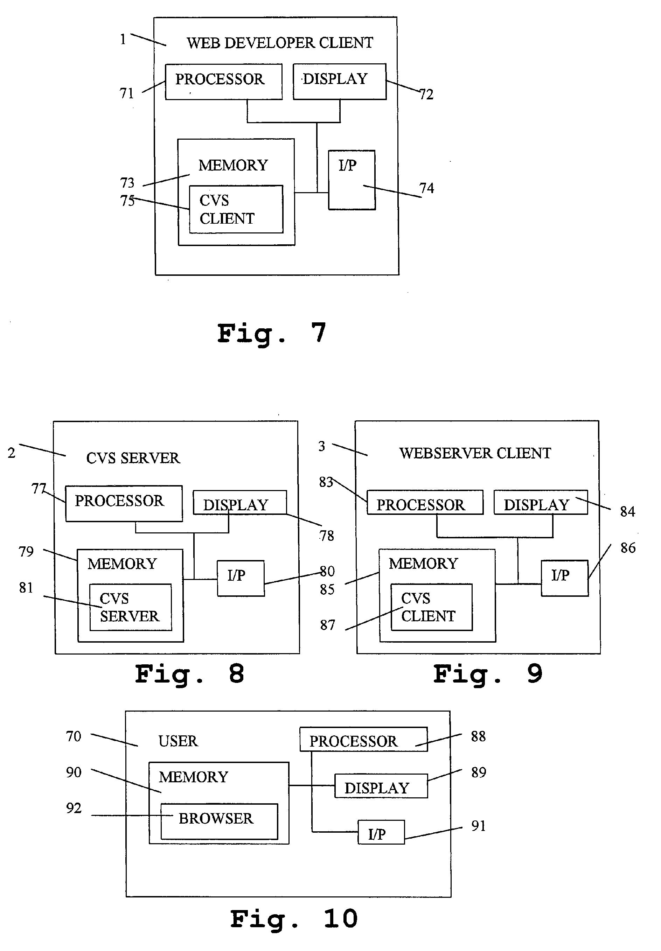

Further, a web developer client, a CVS server, a content server client and a user device as illustrated in Fig. 6 will now be described in greater detail with respect to Figs. 7, 8, 9 and 10.

The client device 640 used by a developer, such as a developer device as outlined before may be constituted, for example, by a personal computer, a desktop computer or a laptop computer, and includes, as illustrated in Fig. 7, a processor 71, a display 72, a memory 73 and an input device 74. The memory 73 includes a CVS client program 75.

The client device 640 is connectable via the network 612 to the CVS server 630, which as illustrated in Fig. 8, includes a processor 77, a display 78, a memory 79, and an input device 80. The memory 79 includes a CVS server program 81.

The CVS server 630 is connectable via a network 611 to the three (as illustrated) content servers 620, 621 and 622, each as illustrated in Fig. 9 including a processor 83, a display 84, a memory 85 and an input device 86. The memory 85 includes a CVS client program 87.

The content servers may be comprised by any data processing device offering a service to other data processing devices and range from a large multi-processor server, through medium sized servers, computers, to a small PDA (Personal Digital Assistant).

The user device 600 as illustrated in Fig. 10 includes a processor 88, a display 89, a memory 90 and an input device 91. The memory 90 includes a browser application 92 allowing a user to read files on the content server. The user device may be comprised, for example, by a desktop computer, a laptop computer, a palm top computer or a PDA.

As will be appreciated the synchronization of the cluster of content servers with the central server is achieved by means of a version control system, in particular CVS. Thus, when a user considers a particular web page on any of the content servers of a cluster, it will be possible, for example, for the CVS repository/archive to be interrogated to provide earlier versions and other data by use of the appropriate CVS comments.

Thus, the use of a version control system, such as CVS, can be extended from version handling only, and in particular aids the deployment of web pages to its uses. When the content of a content server cluster is stored in one or more CVS archives, rather than using a "copy" function for the synchronization of the content server content, the CVS update function can be used.

Non-static content, such as Java-Servlets source files (program code), can also be catered for by having the content servers compile all dynamic pages after the updating of the pages from the central server archive/repository. In this case the developers are software developers rather than web developers. As well as web page content and source files, XML-files, GIF-Images, JPEG images and office documents may comprise content for storage on the central server and transfer to the content servers, so that the content on the content servers is synchronized with that on the central server. These are examples, only, of content for storage and transfer. Basically any file can be stored inside a CVS archive.

Using the methods of the present invention and CVS provides a number of other possible advantages. When the web page developers are used to storing their web pages on a production content server only, they will no longer have to copy their web pages to the master server when it is required to deploy a new or changed page. Instead their data is committed to the CVS server. If they are already using CVS for web page versioning, then no additional work at all is needed for deployment.

As will be appreciated by the person skilled in the art, very little program code is required to perform synchronization. In particular in the case of a use of CVS and synchronization requested by the content servers, a developer can use the normal "CVS add", "CVS commit" commands etc., or a GUI CVS tool such as "jCVs" or "WinCVS" to access the repository. On the content server side a script, an example of which is given below, is executed. The CVS central server is configured like any other CVS server.

In a further embodiment of the invention, a computer-readable medium may be provided having a program embodied thereon, where the program is to make a computer or data processing device execute the synchronization method described above. A computer readable medium can be a magnetic or optical or other tangible medium on which a program is recorded, but can also be a signal, e.g. analog or digital, electromagnetic or optical in which the program is embodied for transmission. The computer-readable medium may constitute a data stream embodying the program. Also, the computer program may be contained on the tangible medium. Further, the computer-readable medium may constitute a data structure embodying the program. Further, a computer program product may be provided comprising the computer-readable medium.

According to another embodiment, a method of synchronizing content stored on a central server and content stored on at least one content server, includes the steps of storing the content on the central server in accordance with a version control system, and employing the version control system for transmitting content updates from the central server to the at least one content server.

The content on the at least one content server may be initially synchronized with the content on the central server, in response to a request from each said content server by transmission of the content stored on the central server to each said content server.

The content updates may be transmitted to the content servers subsequently to the initial synchronization without requests therefore or upon request from at least one of the content servers.

The content may be generated on at least one developer device, and the generated content may be transmitted from said developer devices to said central server, for storage thereat, using the version control system.

In another embodiment, the version control system is a concurrent version system (CVS) and the or each developer device is used to store the generated content on the central server using a commit command. The or each content server may initially request the content from the central server using a checkout command and/or the central server may subsequently transmit content updates to each said content server using an update command.

Alternatively the central server may subsequently transmit content updates to each said content server in response to a respective update command.

The central server may be a master content server also comprising a CVS server, and the at least one content server may be a slave content server.

For example the content server can be one of a multi-processor server, a desktop computer and a personal digital assistant. Moreover, the developer device can be one of a personal computer a desktop computer and a laptop computer.

The servers may be constituted by webservers and the content may comprise one of web pages, program code source files, office documents, JPEG images, XML files and GIF images.

According to another embodiment, content updates are transmitted at predetermined intervals and/or when the content stored at the central server has changed and/or when a predetermined number of files, comprising said content and stored at the central server, have been added or modified.

According to another embodiment of the invention, a computer device may have the following configuration.
1) A computer system comprising:
   a central server upon which content can be stored;
   at least one content server upon which content can be stored; and
   a version control system including a code section having instructions to synchronize the content stored on the central server with the content stored on the at least one content server.
2) A computer system of 1), further comprising at least one developer device including a program having instructions for generating content, and wherein the version control system includes a code section having instructions to transmit the generated content from the at least one developer device to the central server for storage thereat.
3) A computer system of 1), wherein the version control system includes a code section having instructions to transmit an initial version of the content stored on the central server to the at least one content server upon a request therefrom for an initial synchronization.
4) A computer system of 3), wherein the version control system includes a code section having instructions to perform a subsequent synchronization with later versions of the content stored on the central server without requests from the at least one content server.
5) A computer system of 3), wherein the version control system includes a code section having instructions to perform a subsequent synchronization with later versions of the content stored on the central server upon requests from the at least one content server.
6) A computer system of 1), wherein the version control system includes
   a code section having instructions to maintain a log record of timings of synchronizations of content between the central server and the at least one content server and, upon a subsequent synchronization;
   a code section having instructions to identify a timing of a previous synchronization;
   a code section having instructions to identify content which was modified or added after the identified timing; and
   a code section having instructions to use the identified content in the subsequent synchronization.
7) A computer system of 4) or 5), wherein the version control system includes a code section having instructions to perform said subsequent synchronization at predetermined intervals.
8) A computer system of 4), wherein the version control system includes a code section having instructions to detect a change of the content stored at the central server and a code section having instructions to perform said subsequent synchronization when a change of the content is detected.
9) A computer system of 4), wherein the version control system includes a code section having instructions to monitor at least one of adding elements and modifying elements of the content and to perform said subsequent synchronization when a predetermined number of elements has been added or modified.

According to another embodiment of the invention, a central server may have the following configuration.
10) A central server including means to communicate with at least one content server storing a version control system server program, comprising:
   a central server memory for storing a version control system server program and a content store; and
   a central server processor for running the version control system server program and causing updates to the content store to be transmitted to.the content servers in use thereof.
11) A central server of 10), wherein the version control system server program includes a code section having instructions to receive content generated from at least one developer device for storage thereat, each developer device comprising a memory for storing the version control system client program.
12) A central server 10), wherein the version control system server program includes a code section having instructions to transmit an initial version of the content stored on the central server to the at least one content server upon a request therefrom for an initial synchronization.
13) A central server of 12), wherein the version control system server program includes a code section having instructions to perform a subsequent synchronization with later versions of the content stored on the central server without requests from the content servers.
14) A central server of 12), wherein the version control system server program includes a code section having instructions to perform a subsequent synchronization with later versions of the content stored on the central server upon requests from the content servers.
15) A central server of 10), wherein the version control system server program includes
   a code section having instructions to maintain a log record of timings of synchronizations of content between the central server and the at least one content server and, upon a subsequent synchronization;
   a code section having instructions to identify a timing of a previous synchronization;
   a code section having instructions to identify content which was modified or added after the identified timing; and
   a code section having instructions to use the identified content in the subsequent synchronization.
16) A central server of 10), wherein the version control system server program includes a code section having instructions to perform said subsequent synchronization at predetermined intervals.
17) A central server of 10), wherein the version control system server program includes a code section having instructions to detect a change of the content stored at the central server and a code section having instructions to perform said subsequent synchronization when a change of the content is detected.
18) A central server of 10), wherein the version control system server program includes a code section having instructions to monitor at least one of adding elements and modifying elements of the content and a code section having instructions to perform said subsequent synchronization when a predetermined number of elements has been added or modified.

According to another embodiment of the invention, a content server may have the following configuration.
19) A content server including means to communicate with a central server with a version control system, comprising:
   a content server memory for storing a version control system client program, a content store and update requesting code for requesting updates to the content store from the central server; and
   a content server processor for running the version control system client program and executing the update requesting code.
20) A content server of 19), wherein the version control system client program includes a code section having instructions to receive an initial version of the content stored on the central server to upon a request for an initial synchronization.
21) A content server of 19), wherein the version control system client program includes a code section having instructions to receive later versions of the content stored on the central server for subsequent synchronization without requests from the content servers.
22) A content server of 19), wherein the version control system client program includes a code section having instructions to receive later versions of the content stored on the central server upon requests for subsequent synchronizations.

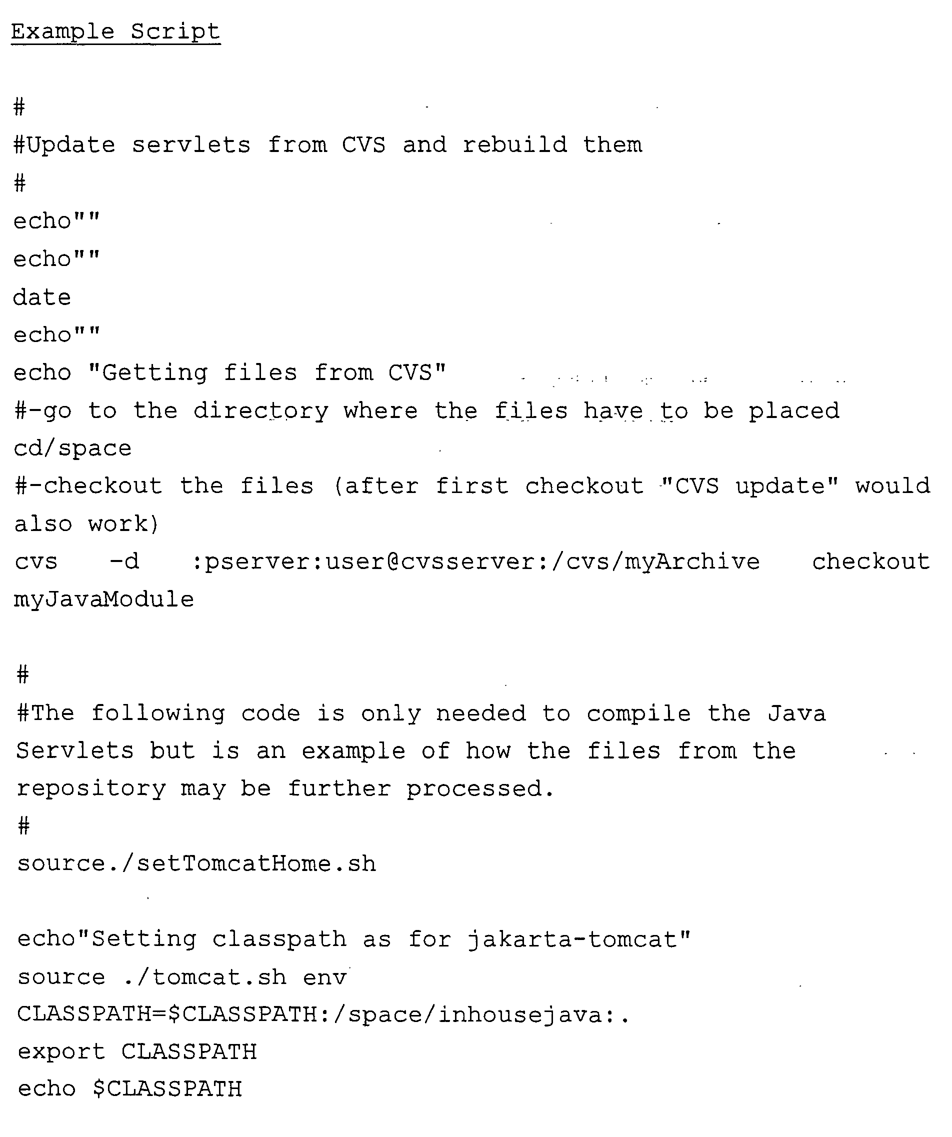

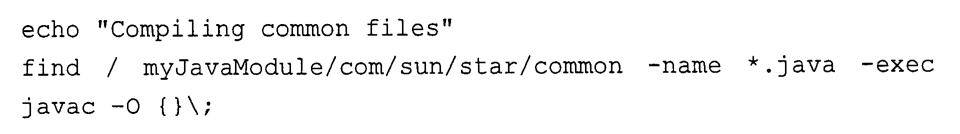

Although methods and systems consistent with the present invention have been described with reference to specific embodiments thereof, these skilled in the art will know of various changes in form and detail which may be made without departing from the present invention as defined in the appended claims and their full scope of equivalents.

## Claims

1. A computer system comprising:
a central server upon which content can be stored;
at least one content server upon which content can be stored; and
a version control system for synchronizing the content stored on the central server with the content stored on the at least one content server.

2. A computer system as claimed in claim 1, further comprising at least one developer device for generating content, and wherein the version control system is arranged to transmit the generated content from the at least one developer device to the central server for storage thereat.

3. A computer system as claimed in claim 1 or claim 2, wherein the version control system includes means to transmit an initial version of the content stored on the central server to the at least one content server upon a request therefrom for an initial synchronization.

4. A computer system as claimed in claim 3, wherein the version control system includes means to perform a subsequent synchronization with later versions of the content stored on the central server without requests from the at least one content server.

5. A computer system as claimed in claim 3, wherein the version control system includes means to perform a subsequent synchronization with later versions of the content stored on the central server upon requests from the at least one content server.

6. A computer system as claimed in at least one of the claims 1 - 5, wherein the version control system includes
means to maintain a log record of timings of synchronizations of content between the central server and the at least one content server and, upon a subsequent synchronization;
means to identify a timing of a previous synchronization;
means to identify content which was modified or added after the identified timing; and
means to use the identified content in the subsequent synchronization.

7. A computer system as claimed in at least one of the claims 1 - 6, wherein
the version control system includes a version control system server program and a version control system client program;
each said developer device comprises a memory for storing the version control system client program;
the central server comprises a memory for storing the version control system server program;
each said content server comprises a memory for storing said version control system client program; and
the generated content being stored in the central server memory and the content server content being stored in the respective content server memories.

8. A computer system as claimed in any one of the claims 1 - 7, wherein the version control system is a concurrent version system (CVS).

9. A computer system as claimed in at least one of the claims 1 - 8, wherein the central server comprises a master content server and a CVS server, and wherein the at least one content server comprises a slave content server.

10. A computer system as claimed in at least one of the claims 1 - 9, including a cluster of content servers.

11. A computer system as claimed in at least one of the claims 1 - 10, wherein the central server is a CVS server.

12. A computer system as claimed in claim 2, wherein the developer device is one of
- a personal computer;
- a desktop computer; and
- a laptop computer.

13. A computer system as claimed in at least one of the claims 1 - 12, wherein the central server and the at least one content server are constituted by webservers.

14. A computer system as claimed in claim 4 or claim 5, wherein the version control system includes means to perform said subsequent synchronization at predetermined intervals.

15. A computer system as claimed in claim 4, wherein the version control system includes means to detect a change of the content stored at the central server and to perform said subsequent synchronization when a change of the content is detected.

16. A computer system as claimed in claim 4, wherein the version control system includes means to monitor at least one of adding elements and modifying elements of the content and to perform said subsequent synchronization when a predetermined number of elements has been added or modified.

17. A central server including means to communicate with at least one content server storing a version control system server program, comprising:
a central server memory for storing a version control system server program and a content store; and
a central server processor for running the version control system server program and causing updates to the content store to be transmitted to the content servers in use thereof.

18. A central server as claimed in claim 17, wherein the version control system server program includes means to receive content generated from at least one developer device for storage thereat, each developer device comprising a memory for storing the version control system client program.

19. A central server as claimed in at least one of claims 17 and 18, wherein the version control system server program includes means to transmit an initial version of the content stored on the central server to the at least one content server upon a request therefrom for an initial synchronization.

20. A central server as claimed in claim 19, wherein the version control system server program includes means to perform a subsequent synchronization with later versions of the content stored on the central server without requests from the content servers.

21. A central server as claimed in claim 19, wherein the version control system server program includes means to perform a subsequent synchronization with later versions of the content stored on the central server upon requests from the content servers.

22. A central server as claimed in at least one of the claims 17 - 21, wherein the version control system server program includes
means to maintain a log record of timings of synchronizations of content between the central server and the at least one content server and, upon a subsequent synchronization;
means to identify a timing of a previous synchronization;
means to identify content which was modified or added after the identified timing; and
means to use the identified content in the subsequent synchronization.

23. A computer system as claimed in any one of the claims 17 - 22, wherein the version control system server program and the version control system client program constitute a concurrent version system (CVS).

24. A central server as claimed in at least one of the claims 17 - 23, comprising a master content server arranged to communicate with a CVS server and with the content servers comprising slave content servers.

25. A central server as claimed in at least one of the claims 17 - 24, constituting a CVS server.

26. A central server as claimed in at least one of the claims 17 - 25, constituting a master content server also comprising a CVS server, and wherein the at least one content server is a slave content server.

27. A central server as claimed in at least one of the claims 17 - 26, wherein the version control system server program includes means to perform said subsequent synchronization at predetermined intervals.

28. A central server as claimed in at least one of the claims 17 - 27, wherein the version control system server program includes means to detect a change of the content stored at the central server and to perform said subsequent synchronization when a change of the content is detected.

29. A central server as claimed in at least one of the claims 17 - 28, wherein the version control system server program includes means to monitor at least one of adding elements and modifying elements of the content and to perform said subsequent synchronization when a predetermined number of elements has been added or modified.

30. A content server including means communicate with a central server with a version control system, comprising:
a content server memory for storing a version control system client program, a content store and update requesting code for requesting updates to the content store from the central server; and
a content server processor for running the version control system client program and executing the update requesting code.

31. A content server as claimed in claim 30, wherein the version control system client program is arranged to receive an initial version of the content stored on the central server to upon a request for an initial synchronization.

32. A content server as claimed in at least one of claims 30 and 31, wherein the version control system client program includes means to receive later versions of the content stored on the central server for subsequent synchronization without requests from the content servers.

33. A content server as claimed in at least one of claims 30 and 31, wherein the version control system client program includes means to receive later versions of the content stored on the central server upon requests for subsequent synchronizations.

34. A content server as claimed in at least one of claims 30 - 33, wherein the version control system server program and the version control system client program constitute a concurrent version system (CVS).

35. A content server as claimed in at least one of claims 30 - 34, comprising at least one slave content server for cooperating with the central server comprising a master content server and a CVS server.

36. A content server as claimed in at least one of the claims 30 - 35, constituted by one of:
- a multi-processor server;
- a desktop computer; and
- a personal digital assistant.

37. A content server as claimed in at least one of the claims 30 - 36, wherein the version control system client program includes means to perform said subsequent synchronization at predetermined intervals.

38. A method of synchronizing content stored on a central server and content stored on at least one content server, including the steps of:
storing the content on the central server in accordance with a version control system; and
employing the version control system for transmitting content updates from the central server to the at least one content server.

39. A method as claimed in claim 38, further including the operation of initially synchronizing the content on the at least one content server with the content on the central server, in response to a request from each said content server, by transmission of the content stored on the central server to each of the at least one content server.

40. A method as claimed in claim 39, wherein the content updates are transmitted to the at least one content server subsequently to the initial synchronization without requests therefore.

41. A method as claimed in claim 39, wherein content updates are transmitted to the at least one content server subsequently to the initial synchronization upon request from the content servers.

42. A method as claimed in at least one of the claims 38 - 41, including
maintaining a log record of timings of synchronizations of content between the central server and the at least one content server and, upon a subsequent synchronization;
identifying a timing of a previous synchronization;
identifying content which was modified or added after the identified timing; and
using the identified content in the subsequent synchronization.

43. A method as claimed in at least one of the claims 38 - 42, further including the operation of obtaining content from at least one developer device at said central server for storage thereat, using the version control system.

44. A method as claimed in claim 43, wherein the version control system is a concurrent version system (CVS) and wherein the at least one developer device transmits the generated content on the central server upon a commit command.

45. A method as claimed in at least one of the claims 38 - 44, wherein the at least one content server initially requests the content from the central server using a checkout command.

46. A method as claimed in claim 45, wherein the central server subsequently transmits content updates to the at least one content server using an update command.

47. A method as claimed in claim 45, wherein the central server subsequently transmits content updates to the at least one content server in response to a respective update command therefrom.

48. A method as claimed in at least one of the claims 38 - 47, wherein the central server is a CVS server.

49. A method as claimed in at least one of the claims 38 - 48, wherein the central server is a master content server also comprising a CVS server, and wherein the at least one content server is a slave content server.

50. A method as claimed in at least one of the claims 38 - 49, wherein the central server and the at least one content server are constituted by webservers.

51. A method as claimed in at least one of the claims 38 - 50, wherein content updates are transmitted at predetermined intervals.

52. A method as claimed in at least one of the claims 38 - 51, wherein content updates are transmitted when the content stored at the central server has changed.

53. A method as claimed in at least one of the claims 38 - 52, wherein content updates are transmitted when a predetermined number of files, comprising said content and stored at the central server, has been added or modified.

54. A program having instructions adapted to carry out the method of any one of claims 38 - 53.

55. A computer readable medium, in which a program is embodied, wherein the program is to make a computer system, including a central server and at least one content server, execute the method of any one of claims 38 - 54.

56. A computer program product comprising the computer readable medium of claim 55.
